# EUROPEAN PATENT APPLICATION

(11) **EP 2 495 459 A1**
(43) Date of publication of application: **05.09.2012**
(21) Application number: 11156957.0
(22) Date of filing: 04.03.2011
(51) Int. Cl.: F16B 45/00, F16B 45/02

(54) **Anchorage device with bearing for lifting, rotating continuously even under load**

(71) Applicant: Stamperia Carcano Giuseppe S.p.A., 22032 Albese con Cassano (IT)
(72) Inventor: Frigerio, Roberto, 22030 Orsenigo (IT)
(74) Representative: Lualdi, Lorenzo

(57) **Abstract**

The present invention relates to an anchorage device with an eyebolt or eye for lifting loads, of the type comprising a fastening element (1) in its turn comprising an eye or eyebolt (1a) connected to a base element (1b) provided with a substantially cylindrical through-hole for insertion of connecting means (7) able to connect said fastening element (1) to an item to be lifted.
The anchorage device according to the present invention is characterized in that it comprises means (2,3,4a,4b,5) for rotation of the eyebolt relative to the load, said means comprising at least one axial thrust bearing (4a,4b,5), which enables the eyebolt to rotate through 360° and continuously relative to the load when attached, even under load, i.e. during lifting.

## Description

### FIELD OF THE INVENTION

The present invention relates to an anchorage device for lifting with an eyebolt or eye of the type comprising a threaded element for fastening to an object to be lifted and a lifting eye, which is able to rotate continuously relative to said object even under load.

### PRIOR ART

Lifting devices with an eyebolt for lifting heavy objects are known by a person skilled in the art. Said lifting devices generally comprise a fastening element with an eyebolt or eye that can be hooked and pulled by various means, such as ropes, chains, hoists and the like.

The eyebolt or lifting eye is generally connected to the object to be lifted by connecting means generally constituted of a threaded pin or a screw that permits stable attachment of the object to the eye. Moreover, the longitudinal axis of said threaded pin or screw also constitutes the axis about which said eyebolt or eye is free to rotate, even when it is retained by the appropriate connecting means that connect it to the item to be lifted. As is known, in fact, the possibility for the eyebolt of being able to rotate about the longitudinal axis of the fastening means is an essential safety requirement for hooks of this type. The eye or eyebolt must in fact be able to rotate through 360° relative to the longitudinal axis of the connecting means so that it can line up with the direction of pulling.

Once alignment with the direction of pulling is achieved, and therefore once the pull necessary for lifting the object is applied, in devices of the type known from the prior art it is no longer possible for the load to rotate freely relative to the eye, because of the manner in which the load is transferred between the eyebolt and the connecting means and owing to the friction that is generated between said elements.

### SUMMARY

The main aim of the present invention is therefore to overcome the drawbacks of the lifting devices with eyebolt of the type known from the prior art.

With this aim, the task of the present invention is to provide an anchorage device with eyebolt that can be oriented in the direction of pulling and is rotatable continuously through 360° about its own central axis of symmetry not only once the device is fastened to the load, but even under load, during lifting of said load. This task, and others that will become clearer in the following, are achieved with an anchorage device of the type comprising a fastening element of the type with an eyebolt or eye that is characterized in that it comprises means for rotation of the eyebolt relative to the load, said means comprising at least an axial thrust bearing.

The anchorage device according to the present invention is further characterized in that said thrust bearing is constituted of a roller cage that is held between two thrust rings so as to form a bearing, and in that the system of the elements of the device permit the creation of axial clearances that make it possible to obtain rotatability of the eyebolt relative to the load even during lifting.

### BRIEF DESCRIPTION OF THE DRAWINGS

Further characteristics and advantages of the present invention will become clearer from the following detailed description, given as an example and non-limiting, and illustrated in the appended drawings in which:
Fig. 1 shows a perspective view of the assembled anchorage device according to the present invention;
Fig. 2 shows an exploded view of the anchorage device of Fig. 1;
Fig. 3 shows a sectional view with a vertical median plane of the anchorage device according to the present invention.

### DETAILED DESCRIPTION OF ONE EMBODIMENT

The anchorage device according to the present invention will now be described with particular reference to a preferred embodiment, illustrated in the appended drawings and considered here purely for purposes of illustration, and non-limiting. The scope of protection of the present patent is accordingly given by its claims and is not to be understood in any way as being limited by the illustrations or by the preferred embodiments presented by way of examples in the description, but rather the claims will comprise all the characteristics of patentable novelty deducible from the present invention, including all the characteristics that would be regarded as equivalent by a person skilled in the art.

With particular reference to the appended drawings, the anchorage device according to the present invention comprises a fastening element **1**, comprising an eye **1a** and an axially perforated base element **1b**, intended to be fastened to lifting means such as ropes, chains, hoists and the like.

The axial hole of said fastening element **1** has a narrowing of section **1d** corresponding to its base, which constitutes a locator for positioning further elements corresponding to the axial cavity provided in the base element **1b**.

Said fastening element **1** receives, at its base, an element with a bushing **3** that has a thin, discoid cylindrical base element **3b** from which a cylindrical bushing **3a** rises, corresponding to the perimeter of the axial hole, and extends from the surface of the disk and is able to fit inside the bottom opening of the fastening element **1**, said bottom opening having, for this purpose, an inside diameter corresponding to the outside diameter of said cylindrical bushing **3a**.

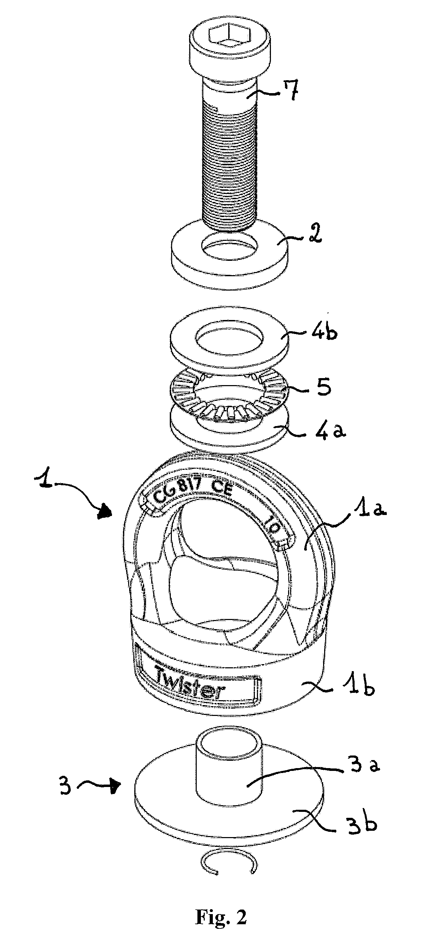

With particular reference to the exploded view in Fig. 2, the fastening element **1** includes connecting means comprising a connecting element **7,** preferably constituted of a threaded screw, and means for rotation of the eyebolt relative to the load, said means for rotation of the eyebolt relative to the load comprising in their turn a plurality of elements all having an axial hole permitting insertion of said connecting element **7**.

These elements comprise a first thrust ring **4a** formed as a disk with an axial hole, a discoidal ring or cage with rotating rollers **5** also with an axial hole, and a second thrust ring, also discoidal and with an axial hole, **4b**.

In assembly of the device, the two thrust rings **4a** and **4b** are placed respectively below and above a roller cage 5, in contact with them, and the assembly of thrust rings and cage forms a thrust bearing.

The axial holes of the lower **4a** and upper **4b** thrust rings and of the roller cage **5** have a diameter such as to be able to accommodate the perforated bushing 3a.

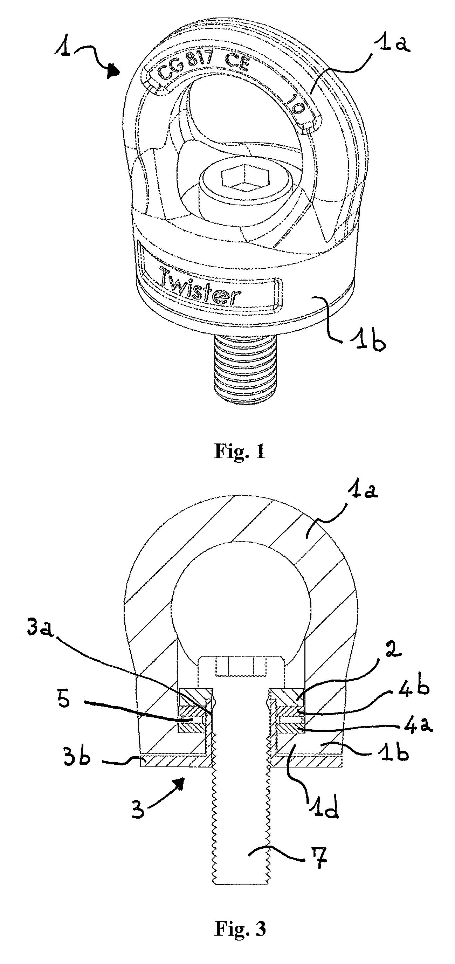

The cylindrical bushing 3a of the bushing element 3 is inserted in the bottom opening of said fastening element 1, as can be seen for example from the sectional view in Fig. 3, and constitutes a guide for insertion of the perforated elements described above, the thrust rings **4a**, **4b** and the roller cage **5**, said bushing **3a** being inserted in the axial hole of said elements.

Above said upper thrust ring **4b**, the assembly of the lifting device according to the present invention envisages the presence of a further locking element **2**, also in the form of a disk with an axial hole and having a locator corresponding to the inside diameter, in the form of removal of material that produces a "step" which, as can be seen from the sectional view in Fig. 3, forms a seating for receiving the upper edge of bushing **3a**.

The head of the connecting screw **7** comes up against the upper surface of said locking element **2** when the device is fastened on the load.

In particular, the lifting device according to the present invention is assembled by mechanical pressing, and this makes it possible to obtain an interference fit between bushing **3a** and locking element **2**.

When the system described so far is assembled, the final configuration of the various components is that shown in Fig. 3.

The lower thrust ring **4a** is inserted in the fastening element **1** with eyebolt, and bears directly on the edge or narrowing of section **1d** provided inside the axial hole of said fastening element **1**, as can be seen in the sectional view in Fig. 3.

The ring or roller cage **5** rests on said lower thrust ring **4a**, from above, and the upper ring **4b** rests on said roller cage **5**; then finally the locking element **2** is placed on top.

In particular, as shown in the diagrams, the cylindrical bushing **3a** of said bushing element **3** is accommodated inside the axial hole of said components **4a**, **5**, **4b**, **2**, so as to form a stack of elements that are housed within the fastening element **1**, and an interference fit is made between bushing **3a** and said locking element **2**, owing to the interference provided by means of said step.

The assembly described so far of the elements that constitute the anchorage device according to the present invention guarantees suitable seating for the axial bearing, making it unnecessary to use additional elements for distributing the forces below the lower thrust ring **4a**, thus making it possible to produce, with the same overall axial dimensions, strong sections of the fastening element 1 of greater thickness.

Still with particular reference to the sectional view in Fig. **3**, the connecting element **7** is inserted axially. Owing to the proportions of the various elements, in particular of the connecting element **7** and of the ring of the eyebolt **1**, it is first necessary to assemble all the elements **4a**, **5**, **4b**, **2** around the connecting element **7**, and then insert these pre-assembled elements inside the eyebolt.

Once the connecting element **7** and elements **4a**, **5**, **4b**, **2** are inserted in the eyebolt, it is possible to insert the bushing element **3** corresponding to the base of the eyebolt **1**. The bushing element **3** must be inserted with its axial bushing **3a** into the eyebolt, reaching the situation shown in Fig. **3**, in which the upper edge of bushing **3a** is inserted in the "flare" or "step" made below corresponding to the inside diameter of the locking element **2**.

The anchorage device according to the present invention thus envisages that the connecting screw **7** can be inserted in the eyebolt only upon pre-assembly of elements **4a**, **5**, **4b** and **2** on the connecting screw, and this thus ensures, instead, that the connecting screw **7** cannot be lost, as it cannot come out of the eyebolt. This result, achievable with the device according to the present invention, is very important both from functional and safety aspects.

Thus, for final assembly, bushing **3a** and locking element **2** are pressed together mechanically, so that they interpenetrate, giving rise to an interference fit that prevents accidental disassembly of the device.

The geometry of the system is such that, once the operation of mechanical pressing is carried out, which brings together the parts that are intended to be in contact, a suitable axial clearance is guaranteed between the rotating body **1** and the other elements connected to the item to be lifted by means of the threaded connecting element **7**.

In particular, as is known, even after mechanical pressing and following tightening of screw **7**, the bushings **4a**, **4b** and the roller cage **5** are not subject to axial loads except those predetermined resulting from the interference fit between the bushing **3a** and the locking element **2**. Since the axial distance between the locking element **2** and the base element **3b** is fixed by the length of the bushing **3a**, there is no packing of the elements **4a**, **4b** and **5** on one another since the axial tightening force is not unloaded on said elements and guarantees optimum operation of the roller bearing **5**.

This clearance allows rotation of the anchorage point, firstly to permit correct alignment between the eyebolt and the direction of pulling, but also, an aspect that is even more important and innovative, allowing the eyebolt **1** to rotate through 360° and continuously even under load, i.e. during the lifting operation, owing to the presence of the axial thrust bearing, constituted in this case of the thrust rings **4a** and **4b** and the roller cage **5**, but which can be replaced with some other device with low friction.

As clearly seen on examining Fig. **3**, the dimensions of the components are such that the upper edge of bushing **3a** of the base element **3** comes up against the locking element **2**, the two elements interpenetrating, while a clearance is maintained between the upper surface of the thin cylindrical base element **3b** and the eyebolt **1**.

Owing to this configuration, once the hook is fastened to the load to be lifted by means of the threaded connecting element **7**, the axial action due to tightening is unloaded via the locking element **2** on bushing **3a**, while on the fastening element with eyebolt **1** the forces, also at full load, are unloaded through the bearing **5** and the thrust rings **4a** and **4b**, interposed between the locking element **2** and the base locator of said eyebolt.

It is owing to the pressing of bushing **3a** into the locking element **2**, and because an axial thrust bearing is interposed between these elements, that the device according to the present invention can easily rotate through 360° even under load, during the operations of lifting of the article to which it is connected by the threaded connecting element **7**.

The anchorage device according to the present invention thus allows the hook to rotate under load relative to the load, something that is not currently achievable with similar devices.

To give an example, it was found that the anchorage device for lifting loads according to the present invention is able to ensure, without problems of seizing or wear, even conditions with rotation of the load at 50 rev/min or more, in contrast to what happens with similar devices of the type known from the prior art, which, if they are subjected to rotation after the load has been attached and lifted, either do not rotate at all or rotate with friction that leads to rapid wear or actually to seizing, with the consequences that can be imagined in terms of safety.

It has thus been demonstrated that the anchorage device according to the present invention achieves the proposed aims and objectives.

In particular, it has been demonstrated that the anchorage device according to the present invention offers the possibility of rotating continuously under load, i.e. once the load has been attached and lifted.

In fact, owing to the particular conformation of bushing **3a** and of locking element 2, which, as mentioned, interpenetrate with interference as a result of assembly by mechanical pressing, a system of clearances and interferences is created that makes it possible to avoid preloading the bearing during securing of the device to the load, maintaining rotation for orienting the hook in the direction of the load. Once the load has been secured and lifted, the anchorage device begins to work on the roller bearing, which thus permits even continuous rotation of the device and therefore of the load, even while the latter remains raised from the ground. Numerous changes can be made by a person skilled in the art while remaining within the scope of protection of the present invention.

## Claims

1. Anchorage device of the type comprising a fastening element (1) in its turn comprising an eye or eyebolt (1 a) connected to a base element (1b) provided with a substantially cylindrical through-hole for insertion of connecting means (7) able to connect said fastening element (1) to an item to be lifted, **characterized in that** it further comprises means (2, 3, 4, 4b, 5) for rotation of the eyebolt relative to the load, said means comprising at least one axial thrust bearing (5).

2. Anchorage device according to the preceding claim, **characterized in that** said means for rotation of the eyebolt relative to the load further comprise a locking element (2) of disk shape and provided with an axial hole, and at least one bushing element (3) in its turn comprising a cylindrical base element of discoidal thickness (3b) and an axial bushing (3a) that can be inserted in said through-hole of said fastening element (1) so as to locate, in the assembled device, said locking element (2) with an interference fit.

3. Anchorage device according to the preceding claim, **characterized in that** said axial thrust bearing is constituted of a rotating roller ring (5) between a first lower thrust ring (4a) and a second upper thrust ring (4b), said thrust rings also forming part of said means for rotation of the eyebolt relative to the load.

4. Anchorage device according to the preceding claim, **characterized in that** said connecting means further comprise at least one threaded connecting element (7).

5. Anchorage device according to the preceding claim, **characterized in that** said locking element (2) has, corresponding to its axial hole, a locator with a step defining a seating able to receive the upper edge of said bushing (3a) in an interference fit.

6. Anchorage device according to any one of the preceding claims, **characterized in that**, with the device assembled, there is an axial clearance between said cylindrical base element (3b) of said bushing element (3) and said base element (1 b) of said fastening element (1).
